# EUROPÄISCHE PATENTSCHRIFT

(11) **EP 0 875 418 B1**
(45) Veröffentlichungstag und Bekanntmachung des Hinweises auf die Patenterteilung: **25.08.2004**
(21) Anmeldenummer: 98103417.6
(22) Anmeldetag: 27.02.1998
(51) Int. Cl.: B60N 3/00, B60N 3/02, B60R 13/02, B60R 11/00

(54) **Vorrichtung zur schraubenlosen Montage eines Ausstattungsteils**
Device for the screwless mounting of a lining
Dispositif pour le montage d'une garniture sans vis

(30) Priorität: 02.05.1997 DE 19718509
(43) Veröffentlichungstag der Anmeldung: 04.11.1998
(73) Patentinhaber: Johnson Controls Interiors GmbH & Co. KG, 42285 Wuppertal (DE)
(72) Erfinder: Jacquemin, Didier, 70300 Luxeuil Les Bains (FR)
(74) Vertreter: Hemmelmann, Klaus

(56) Entgegenhaltungen:
- EP-A- 0 346 158
- GB-A- 2 168 419

## Beschreibung

Die Erfindung betrifft eine Vorrichtung der im Oberbegriff des Anspruchs 1 angegebenen Art.

Bei einer aus WO96/17178 bekannten Vorrichtung dieser Art sind an den beiden miteinander verbundenen Verriegelungselementen im Verbindungsbereich seitlich federnd abstehende Fixierelemente in Stabform angeformt, die sich zusammen mit den Verriegelungselementen durch die Ausnehmung eines einen Ausstattungsteil bildenden Dachhimmels schieben lassen, dabei zueinander gepreßt, und erst nach dem Durchtritt durch die Ausnehmung federnd aufgespreizt werden und sich an der Rückseite des Ausstattungsteils abstützen. Auf diese Weise läßt sich die Vorrichtung am Ausstattungsteil vorfixieren, ehe in einem Endmontageschritt der Ausstattungsteil zusammen mit der darin vorfixierten Vorrichtung an der Fahrzeug-Tragstruktur befestigt wird. Diese Vorfixierung ist unsicher, weil sie von der Federung der relativ langen und nur punktweise angreifenden Fixierelemente abhängt. Die gespreizten, am Ausstattungsteil verkrallten Fixierelemente können ferner das Einführen der Verriegelungselemente in den Ausschnitt der Fahrzeug-Tragstruktur bei der Endmontage behindern. Die Vorrichtung wird in der Fahrzeug-Tragstruktur mittels eines Sperrkeils endmontiert, der zwischen die Verriegelungselemente eingetrieben wird. Da eines der Verriegelungselemente nicht mit dem Grundkörper verbunden ist, kann sich unter einer Last der Grundkörper an einer Seite des Ausschnitts der Tragstruktur abheben.

Bei einer aus US-A-4 913 484 bekannten Vorrichtung wird zur Vorfixierung der Vorrichtung an einem Dachhimmel eine Schraubverbindung benötigt.

Der Erfindung liegt die Aufgabe zugrunde, eine Vorrichtung der eingangs genannten Art zu schaffen, mit der bequem eine sichere Fixierung der Vorrichtung in einem Ausstattungsteil erreichbar ist, der in einem Endmontageschritt mit der bereits fixierten Vorrichtung an der Tragstruktur festgelegt wird. Weiterhin soll bei der zu schaffenden Vorrichtung ein fester Sitz des Grundkörpers an der Tragstruktur auch unter Belastungen möglich sein.

Die gestellte Aufgabe wird erfindungsgemäß mit den Merkmalen des Anspruchs 1 gelöst.

Das in der Einführstellung befindliche Fixierelement läßt sich bequem durch die Ausnehmung des Ausstattungsteils einführen, ehe es von Hand oder von einem Montageroboter in die Fixierstellung bewegt und mittels der Verbindungseinrichtung am Grundkörper festgelegt wird. Es wird auf diese Weise eine sichere Fixierung der Vorrichtung in dem Ausstattungsteil erreicht, der bei der Endmontage zusammen mit der Vorrichtung an der Tragstruktur festgelegt wird. Die Verbindungseinrichtung sollte zumindest so kräftig ausgebildet sein, daß sie sich unter transportbedingten oder montagebedingten Erschütterungen nicht zu lösen vermag. Indem der Grundkörper an der Sichtseite des Ausstattungsteils anliegt, hingegen das festgelegte Fixierelement an der Rückseite, ist die Vorrichtung einwandfrei positioniert. Das Fixierelement stört dann bei der Endmontage der Vorrichtung nicht. Dabei läßt sich die Verbindungseinrichtung formentechnisch einfach und wirksam ausbilden. Sollte eine Demontage der Vorrichtung erforderlich sein, so läßt sich die Verbindungseinrichtung jederzeit wieder lösen.

Gemäß Anspruch 2 leistet das Fixierelement zum Einführen in die Ausnehmung des Ausstattungsteils wenig Bewegungswiderstand, weil es sich im Filmscharnier bzw. Gelenk mit geringem Widerstand bewegen läßt. Eine Fixierzunge ermöglicht eine sichere Halterung am Ausstattungsteil. Die Halterung wird mit günstigem Hebelarm der Fixierzunge erzielt.

Gemäß Anspruch 3 wird eine bequem handhabbare, form- und kraftschlüssig wirkende Verbindungseinrichtung erreicht.

Gemäß Anspruch 4 dient der Flanschbereich am Grundkörper zur Positionierung der Vorrichtung in der Ausnehmung. Ferner sind innerhalb der Flanschhöhe die Anlenkung der Fixierzunge und die Verbindungseinrichtung untergebracht, so daß sie sich nach der Endmontage innerhalb des Ausstattungsteils befinden. Ferner ist diese Ausbildung formentechnisch günstig.

Gemäß Anspruch 5 kooperiert die Fixierzunge zum Fixieren der Vorrichtung mit den Fixierlaschen, die zweckmäßigerweise an einer gegenüberliegenden Seite des Flanschbereiches angeformt sind. Es können mehrere Fixierzungen vorgesehen sein und gegebenenfalls die Fixierlaschen weggelassen werden. Die Fixierzungen stören vorteilhaft bei der Endmontage nicht, da sie sogar wünschenswerte Anlageflächen an der Tragstruktur bilden können.

Die Fixierung kann gemäß Anspruch 6 mittels wenigstens eines Schneidsteges verbessert werden, der eine Verdrehsicherung bewirkt

Gemäß Anspruch 7 ergeben sich günstige Hebelverhältnisse für die Fixierzunge, sobald die Verbindungseinrichtung die Fixierzunge festhält.

Besonders zweckmäßig wird gemäß Anspruch 8 mittels des Anschlagmechanismus der Grundkörper auch in dem Bereich zugfest an der Fahrzeug-Tragstruktur abgestützt, in dem das Verriegelungselement absichtlich vom Grundkörper getrennt ist, um die zum Einführen erforderliche Beweglichkeit der Verriegelungselemente zu gewährleisten. Diese Trennung wird bei der Endmontage durch den Anschlagmechanismus überbrückt. Beide Verriegelungselemente kommen im wesentlichen gleichmäßig zum Tragen, wenn eine Last am Grundkörper angreift. Es ergibt sich eine gleichmäßige und günstig verteilte Kraftübertragung vom Grundkörper in die Fahrzeug-Tragstruktur.

Besonders vorteilhaft wird der Anschlagmechanismus mittels des Sperrkeils betätigt, der die Verriegelungselemente an der Fahrzeug-Tragstruktur festlegt und auch sicherstellt, daß der Anschlagmechanismus ordnungsgemäß betätigt ist und Zugkräfte vom Grundkörper in die Tragstruktur überträgt. Gegebenenfalls ist der Anschlagmechanismus so ausgebildet, daß er unter der Spreizwirkung des Sperrkeils den Grundkörper mit Vorspannung gegen die Tragstruktur preßt, nachdem die Verriegelungselemente ordnungsgemäß verriegelt sind.

Gemäß Anspruch 10 sind die Verbindungseinrichtung für die Fixierung der Vorrichtung und der Anschlagmechanismus für die endgültige Festlegung an verschiedenen Seiten des Flanschbereiches angeordnet, damit die einzelnen beweglichen Komponenten einander nicht behindern und der im Flanschbereich vorhandene Platz maximal genutzt wird.

Besonders zweckmäßig ist die Vorrichtung ein einstückiges Kunststoff-Spritzgußformteil, z.B. aus Polyamid, der kostengünstig, formgenau und mit ansprechendem Aussehen auch in Großserienproduktion herstellbar ist. Der Sperrkeil könnte Teil der Vorrichtung sein, muß es jedoch nicht.

Gemäß Anspruch 12 ist die Vorrichtung zum Festlegen eines Dachhimmels oder einer Garniturplatte bestimmt, wobei mehrere solcher Vorrichtungen vorgesehen werden können und jede Vorrichtung bei der Vormontage bereits am Dachhimmel oder an der Garniturplatte fixiert wird.

Gemäß Anspruch 13 wird die Vorrichtung zum Festlegen eines Haltegriffs an der Tragstruktur verwendet, wobei die Möglichkeit der Fixierung an einem weiteren Ausstattungsteil vorteilhaft und die belastbare Halterung des Grundkörpers mit dem Lagerbock nach der Endmontage speziell bei einem oftmals mit erheblicher Kraft beaufschlagten Haltegriff günstig ist.

Gemäß Anspruch 14 werden mit der Vorrichtung ein Haltegriff am Dachhimmel oder einer Garniturplatte und auch dieser Vorrichtungsteil an der Tragstruktur festgelegt, wobei eine Vormontage mit Fixieren der Vorrichtung, gegebenenfalls schon mit dem Haltegriff, möglich ist. Der Haltegriff sollte dabei nur als Beispiel anzusehen sein, denn es könnte anstelle eines Haltegriffs eine Sonnenblende, eine Blende, ein Spiegel oder dgl. genauso gut mittels der Vorrichtung festzulegen sein.

Anhand der Zeichnung werden Ausführungsformen des Erfindungsgegenstandes erläutert. Es zeigen:
- Fig. 1: in einem Teilschnitt eine an einem Ausstattungsteil zu montierende Vorrichtung vor Abschluß der Vormontage,
- Fig. 2: einen Teilschnitt ähnlich dem von Fig. 1 nach Abschluß der Vormontage und vor einer Endmontage, und
- Fig. 3: in einem Teilschnitt eine weitere Ausführungsform einer solchen Vorrichtung nach der Endmontage.

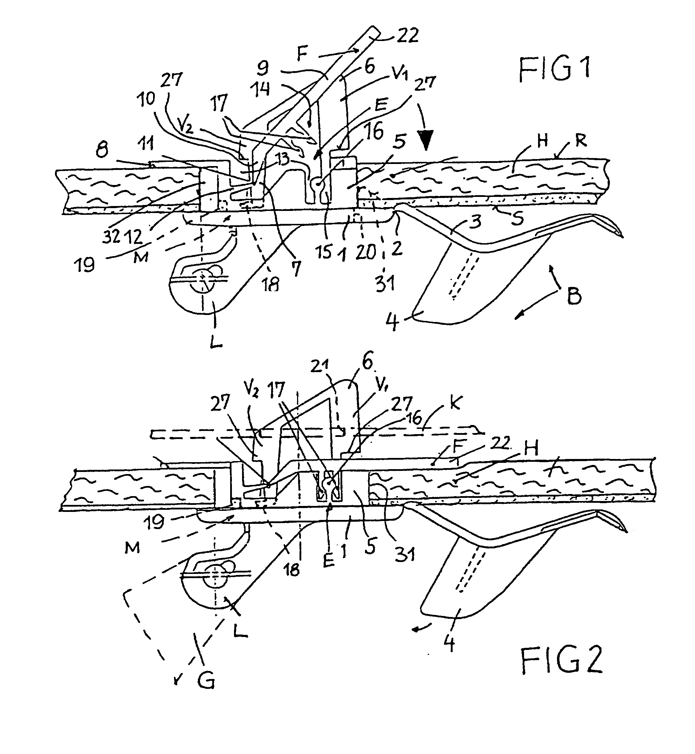

Eine Vorrichtung B gemäß den Fig. 1 und 2 dient zum Festlegen eines Ausstattungsteils H an einer Fahrzeug-Tragstruktur K (gestrichelt in Fig. 2 gezeigt), insbesondere bei der Montage einer Kraftfahrzeugkarosserie. Der Ausstattungsteil H kann ein Dachhimmel oder eine Garniturplatte oder dgl. sein. Die Vorrichtung B kann - wie dargestellt - auch zum Befestigen eines anderen Ausstattungsteils, hier eines Haltegriffes G oder dgl., dienen und ist für diesen Zweck mit einem Lagerbock L für den Haltegriff G ausgestattet. Der Lagerbock L könnte weggelassen werden; dann dient die Vorrichtung B nur zum Befestigen des Ausstattungsteils H. Anstelle des Lagerbocks könnte die Vorrichtung auch wenigstens eine andere Befestigungseinrichtung für andere Ausstattungsteile wie eine Sonnenblende, eine Armlehne, einen Rückspiegel, Beleuchtungskörper, Blenden und dgl. aufweisen (nicht gezeigt).

Die Vorrichtung ist zweckmäßigerweise ein einstückiges Kunststoff-Spritzguß-Formteil, beispielsweise aus Polyamid, und weist zweckmäßigerweise eine ästhetisch ansprechende oder dekorative Sichtseite auf.

An einen rahmenförmigen Grundkörper 1 ist mittels eines Filmscharniers oder eines Gelenks 2 eine Verschlußklappe 3 verschwenkbar angeschlossen, die einen Sperrkeil 4 trägt, dessen Zweck später erläutert wird. Die Verschlußklappe 3 könnte mit dem Sperrkeil 4 bei Bedarf auch ein eigenes Kunststoff-Formteil oder Metall-Formteil sein. An der der Sichtseite abgewandten Rückseite des Grundkörpers 1 ist ein vortretender Flanschbereich 5 angeformt, der eine Einführöffnung 20 im Grundkörper 1 umgibt und eine Höhe besitzt, die in etwa der Stärke des mit der Vorrichtung zu befestigenden Ausstattungsteils H entspricht. Vom Inneren des Flanschbereiches 5 und in Verlängerung eines Einführöffnungsrandes erstreckt sich ein plattenartiges Verriegelungselement V1 annähernd senkrecht zur Ebene des Grundkörpers 1. In einem kniegelenkartigen Verbindungsbereich 6 ist an das Verriegelungselement V1 ein weiteres Verriegelungselement V2 angeschlossen, das vom Verbindungsbereich 6 zunächst schräg abfällt und dann in etwa parallel zum Verriegelungselement V1 mit einem freien Endabschnitt 7 zum Grundkörper 1 zurückführt. Der freie Endabschnitt 7 ist nicht mit dem Grundkörper 1 verbunden, so daß die beiden Verriegelungselemente V1, V2 im Verbindungsbereich 6 relativ zueinander und im Verbindungsbereich des Verriegelungselements V1 mit dem Grundkörper 1 relativ zu diesem federnd beweglich sind. An der Außenseite jedes Verriegelungselementes V1, V2 ist wenigstens eine nach außen vorspringende Stützschulter 27 angeformt. Am Flanschbereich 5 sind zumindest an einer Seite im Abstand oberhalb des Grundkörpers 1 zu diesem annähernd parallele Fixierlaschen 8 vorgesehen, die über den Umriß des Grundkörpers 1 nach außen vorstehen können. Ferner sind außen am Flanschbereich in etwa in Einsteckrichtung verlaufende Schneidstege 32 vorgesehen.

Im Flanschbereich 5 sind an zwei gegenüberliegenden Seitenbereichen in Taschen 13 Anschlußteile 12 angebracht, an denen über Filmscharniere 11 stabartige Fixierelemente F derart gehalten sind, daß sie in in etwa zum Grundkörper 1 senkrechten Ebenen zwischen einer in Fig.1 angedeuteten Einführstellung und einer in Fig. 2 angedeuteten Fixierstellung beweglich sind. Die Fixierelemente F sind Fixierzungen 9, deren Endbereiche 22 in der Fixierstellung über den Umriß des Grundkörpers 1 nach außen vorstehen können.

Am nicht direkt mit dem Grundkörper 1 verbundenen Verriegelungselement V2 ist wenigstens ein nach außen vortretendes Eingriffselement 18 angeformt, zu dessen Eingriff im Grundkörper 1 bzw. im Flanschbereich 5 ein zweckmäßigerweise als Aufnahmetasche ausgebildetes Gegeneingriffselement 19 vorgesehen ist. Das Eingriffselement 18 ist zweckmäßigerweise ein Haken am freien Endabschnitt 7 des Verriegelungselementes V2, der in die Aufnahmetasche einbringbar ist, um den Grundkörper 1 in Ausziehrichtung mit dem Verriegelungselement V2 zu koppeln. Diese beiden Komponenten bilden einen Anschlagmechanismus M, der zweckmäßigerweise mittels des Sperrkeiles 4 betätigbar ist, sobald dieser durch die Einführöffnung 20 von unten durch den Grundkörper 1 eingetrieben wird, um die beiden Verriegelungselemente V1, V2 zu sichern.

Zwischen jeder Fixierzunge 9 und dem Grundkörper 1 ist ferner eine Verbindungseinrichtung E vorgesehen, die zweckmäßigerweise form- und/oder kraftschlüssig arbeitet und es gestattet, die Fixierzunge 9 in der Fixierstellung zu arretieren. Die Verbindungseinrichtung E besteht aus einem zangenförmigen Clip 17, beispielsweise an der Unterseite der Fixierzunge 9, und aus einem darauf ausgerichteten, verdickten Zapfen 16 in einer nach oben offenen Tasche 13 des Flanschbereiches 5. Diese Komponenten bilden form- und/oder kraftschlüssige Verbindungsteile 14, 15 der Vorrichtung B. Die Verbindungseinrichtung E und die Fixierzungen 9 könnten bei Nichtgebrauch auch weggelassen werden.

Der Ausstattungsteil H besitzt eine Sichtseite S und eine Rückseite R sowie eine Ausnehmung 31 zum Einführen der Vorrichtung B. Zur Vormontage der Vorrichtung B an dem Ausstattungsteil H noch vor dessen Montage an der Fahrzeug-Tragstruktur K (im Karosserieblech mit einem Ausschnitt 21) wird der Grundkörper 1 (mit oder ohne Haltegriff G) von der Sichtseite S mit dem Flanschbereich 5, den Verriegelungselementen V1, V2 und den in ihren Einführstellungen befindlichen Fixierzungen 9 in die Ausnehmung 31 eingeführt, bis der Grundkörper 1 an der Sichtseite S anliegt. Unter leichtem Schrägstellen werden die Fixierlaschen 8 über die Rückseite R gekippt, ehe nachfolgend die Fixierzungen 9 um ihre Filmscharniere 11 in die Fixierstellungen verschwenkt werden, in denen ihre freien Enden 22 ebenfalls auf der Rückseite R aufliegen. Bei dieser Bewegung der Fixierzungen 9 werden die Verbindungseinrichtungen E betätigt, um die Fixierzungen 9 in den Fixierstellungen festzulegen. Der verdickte Zapfen 16 tritt in das Maul des zangenartigen Clip 17 ein und hält die Fixierzunge 9 fest. Die Vorrichtung ist damit am Ausstattungsteil H vormontiert und positioniert und kann selbsttätig nicht mehr abfallen (Fig. 2). Die Schneidstege 32 können - falls vorhanden-in den Rand der Ausnehmung 31 eingreifen, um die Positionierung der Vorrichtung B zu verbessern. Der Sperrkeil 4 ist zunächst noch nicht in die Einführöffnung 20 eingebracht.

In einem weiteren Montageschritt ist nun der Ausstattungsteil H mittels der Vorrichtung B an der Fahrzeug-Tragstruktur K festzulegen. Dazu werden die Verriegelungselemente V1, V2 durch den Ausschnitt 21 geschoben, bis die Oberseiten der Fixierlaschen 8 und die Fixierzungen 9 sowie der Flanschbereich 5 an der Unterseite der Tragstruktur K anliegen. Beim Durchgang durch den Ausschnitt 21 werden die Verriegelungselemente V1, V2 federnd zueinander und relativ zum Grundkörper 1 bewegt, bis schließlich unter den federnden Rückstellkräften die Stützschultern 27 hinter die Ränder des Ausschnittes 21 greifen. Um den Eingriff der Verriegelungselemente V1, V2 zu sichern, bzw. diese in ihre endgültige Montierposition zu zwingen, wird der Sperrkeil 4 durch die Einführöffnung 20 zwischen die Verriegelungselemente V1, V2 getrieben, bis schließlich die Verschlußklappe 3 die Einführöffnung verschließt (und mit nicht dargestellten Rastgliedern an der Verschlußklappe 3 und/oder am Sperrkeil 4 festgelegt wird).

Zur Demontage sind die vorerwähnten Schritte in umgekehrtem Ablauf durchzuführen.

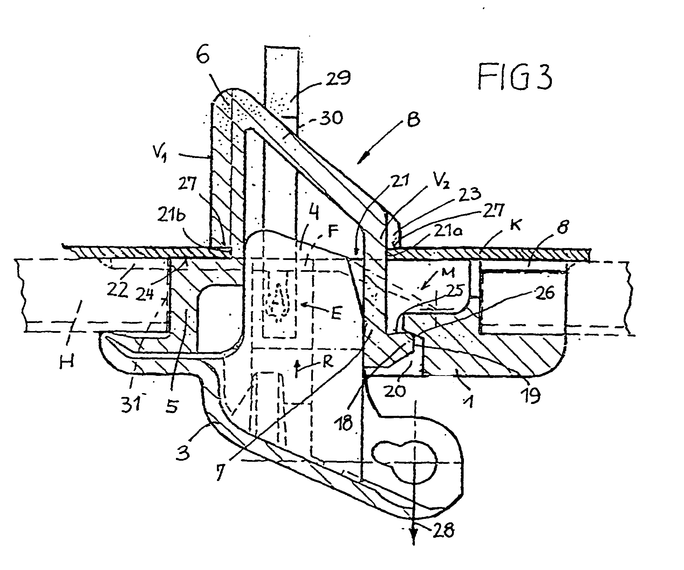

Die Vorrichtung B in Fig. 3 ist in Funktion und Aufbau der Vorrichtung B der Fig. 1 und 2 ähnlich. Sie ist in der Endmontagestellung dargestellt, in der der Ausstattungsteil H an der Tragstruktur K festgelegt und die Verriegelungselemente V1, V2 gesichert sind und mit ihren Stützschultern 27 Ausschnittsränder 21b und 21a des Ausschnitts 21 hintergreifen. Der Sperrkeil 4 ist durch Schließen der Verschlußklappe 3 am Grundkörper 1 zwischen die Verriegelungselemente V1, V2 eingetrieben, derart, daß der Anschlagmechanismus M betätigt ist und den Grundkörper 1 entgegengesetzt zur Einsteckrichtung R zugfest mit dem freien Endabschnitt 7 des Verriegelungselementes V2 koppelt. Der Anschlagmechanismus M ist wiederum gebildet durch den als vorspringender Haken ausgestalteten Eingriffsteil 18, der in die als zur Sichtseite des Grundkörpers 1 offen ausgebildete, den Gegeneingriffsteil 19 definierende Tasche gedrückt ist. Im Gegeneingriffsteil 19 ist eine Anzugsschräge 26 geformt, die den Flanschbereich 5 mit einer Vorspannung gegen die Tragstruktur K preßt. Der Eingriffsteil 18 kann eine hinterschnittene Fläche 25 oder ebenfalls eine Anzugsschräge aufweisen. Bei 24 ist eine Anlagefläche des Flanschbereiches 5 gezeigt. Die bei den Verriegelungselemente V1, V2 sind durch den Sperrkeil 4 im Verbindungsbereich 6 auseinandergespreizt. Die Stützschulter 27 am Verriegelungselement V2 wird von wenigstens einem nach außen ragenden Vorsprung 23 begrenzt.

Im Unterschied zu den Fig. 1 und 2 ist bei der Vorrichtung B in Fig. 3 an beiden Seiten des Verriegelungselementes V2 je eine in der Ansicht der Fig. 3 vertikal verlaufende Zunge 29 angeformt, die mit ihrem unteren Ende bis zur Einführöffnung 20 greift. In Richtung der Zeichnungsebene gesehen divergieren die Zungen 29, die bei 30 mit dem Verriegelungselement V2 verbunden sind, nach unten.

Der in den Fig. 1 und 2 gestrichelt angedeutete Anschlagmechanismus M könnte auch weggelassen werden, beispielsweise für den Fall, daß die Vorrichtung ausschließlich zum Festlegen des Ausstattungsteils H an der Tragstruktur K bestimmt und deshalb keinen nennenswerten Belastungen ausgesetzt ist.

Die Vorrichtung B gemäß Fig. 3 kann mit den Fixierlaschen 8 und den Fixierzungen F (gestrichelt angedeutet) ausgestattet sein, die in der Fixierstellung mit ihren freien Enden 22 auf den Ausstattungsteil H aufliegen, um die Vorrichtung B bei der Vormontage am Ausstattungsteil H zu fixieren. Die Fixierzungen F und die Fixierlaschen 8 müssen nicht notwendigerweise vorgesehen sein. Sind die Fixierzungen F vorgesehen, dann ist auch die Verbindungseinrichtung E vorhanden, die es ermöglicht, die Fixierzungen F in ihren Fixierstellungen mit dem Grundkörper 1 form- und/oder kraftschlüssig zu verbinden, sobald der Flanschbereich 5 in die Ausnehmung 31 des Ausstattungsteils H eingeführt worden ist. Ferner ist am Grundkörper 1 der Lagerbock L angeformt, der gegebenenfalls auch weggelassen werden kann.

Wirkt in der Endmontagestellung in Fig. 3 über den Lagerbock L eine Kraft in Richtung eines Pfeiles 28, so wird diese Kraft auf beide Ausschnittsränder 21a, 21b übertragen, da das Verriegelungselement V1 direkt mit dem Grundkörper 1 verbunden und das Verriegelungselement V2 durch die Betätigung des Anschlagmechanismus M in dieser Kraftrichtung mit dem Grundkörper 1 verbunden ist.

## Patentansprüche

1. Vorrichtung zur schraubenlosen Montage wenigstens eines Ausstattungsteils (H, G) an einer einen Montage-Ausschnitt (21) aufweisenden Fahrzeug-Tragstruktur (K), insbesondere des Dachhimmels am Karosserieblech eines Kraftfahrzeugs, mit angeformten Verriegelungselementen (V1, V2) und wenigstens einem ein zwischen einer Einführstellung und einer Fixierstellung bewegliches Fixierelement (F) aufweisenden Grundkörper (1), wobei die Verriegelungselemente und das Fixierelement bis zur Anlage des Grundkörpers (1) an der Sichtseite des Ausstattungsteils durch dessen Ausnehmung durchsteckbar sind und das Fixierelement in der Fixierstellung zur Anlage an der Rückseite (R) des Ausstattungsteils bringbar ist, um die Vorrichtung (8) im Ausstattungsteil (H) lagezusichern, **dadurch gekennzeichnet, daß** zwischen dem Fixierelement (F) und dem Grundkörper (1) zumindest eine Verbindungseinrichtung (E) zum wahlweisen Festlegen des Fixierelementes (F) in der Fixierstellung vorgesehen ist und die Verbindungseinrichtung (E) zueinander passende form- und/oder kraftschlüssige Verbindungsteile (14, 15) am Fixierelement (F) und am Grundkörper (1) aufweist.

2. Vorrichtung nach Anspruch 1, **dadurch gekennzeichnet, daß** das Fixierelement (F) eine über ein Filmscharnier (11) in die annähernd zum Grundkörper (1) parallele Fixierstellung bewegliche Fixierzunge (9) ist, und daß die Verbindungseinrichtung (E) im Abstand vom Filmscharnier bzw. Gelenk (11) angeordnet ist.

3. Vorrichtung nach Anspruch 1, **dadurch gekennzeichnet, daß** der eine Verbindungsteil (15) ein verdickter Zapfen (16) und der andere Verbindungsteil (14) ein zangenartiger Clip (17) ist, und daß, vorzugsweise, der Clip (17) an der Fixierzunge (9) angeformt ist.

4. Vorrichtung nach wenigstens einem der vorhergehenden Ansprüche, **dadurch gekennzeichnet, daß** am Grundkörper (1) an der Rückseite ein in die Ausnehmung (31) passender Flanschbereich (5) vorgesehen ist, daß am Flanschbereich (5) an zwei gegenüberliegenden Seitenbereichen je eine Fixierzunge (9) angelenkt ist, und daß der Verbindungsteil (15) am Grundkörper (1) in einer Tasche (13) des Flanschbereiches (5) vorgesehen ist.

5. Vorrichtung nach wenigstens einem der vorhergehenden Ansprüche, **dadurch gekennzeichnet, daß** ein freies Ende (22) der Fixierzunge (9) in der Fixierstellung über den Umriß des Flanschbereiches (5) vorsteht, und daß, vorzugsweise, an der dem vorstehenden freien Ende (22) der Fixierzunge (9) gegenüberliegenden Seite des Flanschbereiches (5) wenigstens eine zum Grundkörper (1) in etwa parallele, davon beabstandete, fest angebrachte Fixierlasche (8) über den Umriß des Flanschbereiches (5) vorsteht.

6. Vorrichtung nach Anspruch 5, **dadurch gekennzeichnet, daß** zumindest zwischen der Fixierlasche (8) und dem Grundkörper (1) wenigstens ein in Einsteckrichtung verlaufender Schneidsteg (9) vorgesehen ist.

7. Vorrichtung nach wenigstens einem der vorhergehenden Ansprüche, **dadurch gekennzeichnet, daß** das Filmscharnier oder Gelenk (11) in etwa gleich weit vom Grundkörper (1) beabstandet ist wie die Verbindungseinrichtung (E), und daß die Fixierzunge (9) einen im wesentlichen geraden Abschnitt und einen zum Filmscharnier oder Gelenk (11) führenden, abgekröpften Endabschnitt (10) besitzt.

8. Vorrichtung nach wenigstens einem der vorhergehenden Ansprüche, **dadurch gekennzeichnet, daß** eines der Verriegelungselemente (V1, V2) einen vom Grundkörper (1) getrennten Endabschnitt (7) aufweist, und daß zwischen diesem Verriegelungselement (V2) und dem Grundkörper (1) ein Anschlagmechanismus (M) vorgesehen ist, mit dem bei an der Fahrzeug-Tragstruktur (K) montierter Vorrichtung der Grundkörper (1) entgegengesetzt zur Einsteckrichtung (R) mit diesem Verriegelungselement (V2) zugfest koppelbar ist.

9. Vorrichtung nach Anspruch 8, **dadurch gekennzeichnet, daß** die Verriegelungselemente (V1, V2) mittels eines Sperrkeils (4) an der Fahrzeug-Tragstruktur (K) verriegelbar sind, und daß der Anschlagmechanismus (M) mittels des Sperrkeils (4) betätigbar ist.

10. Vorrichtung nach wenigstens einem der vorhergehenden Ansprüche, **dadurch gekennzeichnet, daß** die Verbindungseinrichtung (E) zwischen dem Fixierelement (F) und dem Grundkörper (1) und der Anschlagmechanismus (M) zwischen dem Verriegelungselement (V2) und dem Grundkörper (1) an unterschiedlichen Seiten des Grundkörpers (1) vorgesehen sind.

11. Vorrichtung nach wenigstens einem der vorhergehenden Ansprüche, **dadurch gekennzeichnet, daß** die Vorrichtung (8) als einstückiger Kunststoff-Spritzguß-Formteil ausgebildet ist.

12. Vorrichtung nach wenigstens einem der vorhergehenden Ansprüche, **dadurch gekennzeichnet, daß** mit der Vorrichtung (8) ein als Dachhimmel oder Garniturplatte ausgebildeter erster Ausstattungsteil (H) an einem die Fahrzeug-Tragstruktur (K) bildenden Karosserieblech festlegbar und die Vorrichtung (8) vor der Endmontage des Ausstattungsteils (H) an diesem fixierbar ist.

13. Vorrichtung nach wenigstens einem der vorhergehenden Ansprüche, **dadurch gekennzeichnet, daß** am Grundkörper (1) an der Sichtseite ein Lagerbock (L) für einen Haltegriff (G) vorgesehen ist.

14. Vorrichtung nach Anspruch 13, **dadurch gekennzeichnet, daß** mit der Vorrichtung (8) ein als Dachhimmel oder Garniturplatte ausgebildeter erster Ausstattungsteil (H) sowie wenigstens ein weiterer, als Haltegriff ausgebildeter weiterer Ausstattungsteil (G) an einem die Fahrzeug-Tragstruktur (K) bildenden Karosserieblech festlegbar sind, und daß die Vorrichtung (8) vor der Endmontage des ersten Ausstattungsteils (H) an diesen mit oder ohne dem weiteren Ausstattungsteil (G) fixierbar ist.

## Claims

1. Device for the screwless installation of at least one equipment part (H,G) on a vehicle supporting structure (K) having an installation cutout (21), in particular of the roof lining on the body sheet of a motor vehicle, having integrally formed locking elements (V1, V2) and at least one basic body (1) which has a fixing element (F) which can be moved between an introductory position and a fixing position, it being possible for the locking elements and the fixing element to be plugged through the recess of the equipment part until the basic body (1) bears against the visible side of the said equipment part, and it being possible for the fixing element to be brought, in the fixing position, to bear against the rear side (R) of the equipment part in order to secure the device (8) in position in the equipment part (H), **characterized in that** at least one connecting device (E) for the optional securing of the fixing element (F) in the fixing position is provided between the fixing element (F) and the basic body (1), and the connecting device (E) has form-fitting and/or frictional connecting parts (14, 15) matching each other on the fixing element (F) and on the basic body (1).

2. Device according to Claim 1, **characterized in that** the fixing element (F) is a fixing tongue (9) which can be moved via a film hinge (11) into the fixing position, which is approximately parallel to the basic body (1), and **in that** the connecting device (E) is arranged at a distance from the film hinge or joint (11).

3. Device according to Claim 1, **characterized in that** the one connecting part (15) is a thickened pin (16) and the other connecting part (14) is a pincer-like clip (17), and **in that**, preferably, the clip (17) is integrally formed on the fixing tongue (9).

4. Device according to at least one of the preceding claims, **characterized in that** a flange region (5) which fits into the recess (31) is provided on the rear side of the basic body (1), **in that** a respective fixing tongue (9) is articulated on two opposite side regions on the flange region (5), and **in that** the connecting part (15) is provided on the basic body (1) in a pocket (13) of the flange region (5).

5. Device according to at least one of the preceding claims, **characterized in that** a free end (22) of the fixing tongue (9) protrudes, in the fixing position, over the contour of the flange region (5), and **in that**, preferably, on that side of the flange region (5) which lies opposite the protruding, free end (22) of the fixing tongue (9) at least one fixing tab (8), which is approximately parallel to the basic body (1), is spaced apart therefrom and is fixably attached, protrudes over the contour of the flange region (5).

6. Device according to Claim 5, **characterized in that** at least one intersecting web (32) which runs in the plug-in direction is provided at least between the fixing tab (8) and the basic body (1).

7. Device according to at least one of the preceding claims, **characterized in that** the film hinge or joint (11) is spaced apart from the basic body (1) approximately to the same extent as the connecting device (E), and **in that** the fixing tongue (9) has an essentially rectilinear section and a bent end section (10) leading to the film hinge or joint (11).

8. Device according to at least one of the preceding claims, **characterized in that** one of the locking elements (V1, V2) has an end section (7) separated from the basic body (1), and **in that** a stop mechanism (M) is provided between this locking element (V2) and the basic body (1), with which, when the device is fitted on the vehicle supporting structure (K), the basic body (1) can be coupled in an extension-resistant manner to this locking element (V2) in a direction opposed to the plug-in direction (R).

9. Device according to Claim 8, **characterized in that** the locking elements (V1, V2) can be locked on the vehicle supporting structure (K) by means of a locking wedge (4), and **in that** the stop mechanism (M) can be actuated by means of the locking wedge (4).

10. Device according to at least one of the preceding claims, **characterized in that** the connecting device (E) is provided between the fixing element (F) and the basic body (1), and the stop mechanism (M) is provided between the locking element (V2) and the basic body (1), on different sides of the basic body (1).

11. Device according to at least one of the preceding claims, **characterized in that** the device (8) is designed as a single-piece plastic injection-moulded shaped part.

12. Device according to at least one of the preceding claims, **characterized in that** the device (8) can be used to secure a first equipment part (H), which is designed as a roof lining or mounting plate, on a body sheet forming the vehicle supporting structure (K), and the device (8) can be fixed on the equipment part (H) before the final installation thereof.

13. Device according to at least one of the preceding claims, **characterized in that** a pillow block (L) for a grab handle (G) is provided on the visible side of the basic body (1).

14. Device according to Claim 13, **characterized in that** the device (8) can be used to secure a first equipment part (H), which is designed as a roof lining or mounting plate, and at least one further equipment part (G), which is designed as a grab handle, on a body sheet forming the vehicle supporting structure (K), and **in that** the device (8) can be fixed on the first equipment part (H) with or without the further equipment part (G) before the final installation of the said first equipment part (H).

## Revendications

1. Dispositif pour le montage sans vis d'au moins une partie de garniture (H, G) sur une structure porteuse de véhicule (K) présentant une découpe de montage (21), notamment de l'habillage de plafond de toit sur la tôle de carrosserie d'un véhicule automobile, comprenant des éléments de verrouillage (V1, V2) moulés et au moins un corps de base (1) présentant un élément de fixation (F) mobile entre une position d'introduction et une position de fixation, les éléments de verrouillage et l'élément de fixation étant traversants jusqu'à l'appui du corps de base (1) sur le côté visible de la partie de garniture à travers son évidemment et l'élément de fixation pouvant être amené dans la position de fixation en appui sur le côté arrière (R) de la partie dé garniture afin de maintenir en position le dispositif (8) dans la partie de garniture (H), **caractérisé en ce qu'**entre l'élément de fixation (F) et le corps de base (1) est prévu au moins un dispositif de liaison (E) pour fixer au choix l'élément de fixation (F) dans la position de fixation et le dispositif de liaison (E) présente des pièces de liaison (14, 15) s'adaptant les unes aux autres par conjugaison de forme et/ou par adhérence sur l'élément de fixation (F) et sur le corps de base (1).

2. Dispositif selon la revendication 1, **caractérisé en ce que** l'élément de fixation (F) est une languette de fixation (9) mobile par le biais d'une charnière à film (11) dans la position de fixation approximativement parallèle au corps de base (1) et **en ce que** le dispositif de liaison (E) est disposé à distance de la charnière à film ou de l'articulation (11).

3. Dispositif selon la revendication 1, **caractérisé en ce que** l'une des pièces de liaison (15) est un tourillon épaissi (16) et l'autre pièce de liaison (14) est un clip de type pince (17) et **en ce que** le clip (17) est de préférence moulé sur la languette de fixation (9).

4. Dispositif selon au moins l'une quelconque des revendications précédentes, **caractérisé en ce qu'**une région de bride (5) s'adaptant dans l'évidemment (31) est prévue sur le côté arrière du corps de base (1), **en ce qu'**à chaque fois une languette de fixation (9) est articulée sur la région de bride (5) sur deux régions latérales opposées et **en ce que** la pièce de liaison (15) est prévue sur le corps de base (1) dans une poche (13) de la région de bride (5).

5. Dispositif selon au moins l'une quelconque des revendications précédentes, **caractérisé en ce qu'**une extrémité libre (22) de la languette de fixation (9) fait saillie dans la position de fixation au-delà du pourtour de la région de bride (5) et **en ce que**, de préférence, sur le côté opposé à l'extrémité libre (22) saillante de la languette de fixation (9) de la région de bride (5), au moins une patte de fixation (8) montée fixement approximativement parallèle au corps de base (1) et à distance de celui-ci fait saillie au-delà du pourtour de la région de bride (5).

6. Dispositif selon la revendication 5, **caractérisé en ce qu'**au moins entre la patte de fixation (8) et le corps de base (1) est prévue au moins une traverse de découpe (9) s'étendant dans la direction d'enfichage.

7. Dispositif selon au moins l'une quelconque des revendications précédentes, **caractérisé en ce que** la charnière à film ou l'articulation (11) est à environ la même distance du corps de base (1) que le dispositif de liaison (E) et **en ce que** la languette de fixation (9) possède une portion essentiellement droite et une portion d'extrémité (10) coudée, conduisant à la charnière à film ou à l'articulation (11).

8. Dispositif selon au moins l'une quelconque des revendications précédentes, **caractérisé en ce que** l'un des éléments de verrouillage (V1, V2) présente une portion d'extrémité (7) séparée du corps de base (1) et **en ce qu'**entre cet élément de verrouillage (V2) et le corps de base (1) est prévu un mécanisme de butée (M) avec lequel dans le cas du dispositif monté sur la structure porteuse de véhicule (K), le corps de base (1) peut être accouplé de manière fixe en traction à l'élément de verrouillage (V2) à l'opposé de la direction d'enfichage (R).

9. Dispositif selon la revendication 8, **caractérisé en ce que** les éléments de verrouillage (V1, V2) peuvent être verrouillés au moyen d'une clavette de blocage (4) sur la structure porteuse de véhicule (K) et **en ce que** le mécanisme de butée (M) peut être actionné au moyen de la clavette de blocage (4).

10. Dispositif selon au moins l'une quelconque des revendications précédentes, **caractérisé en ce que** le dispositif de liaison (E) est prévu entre l'élément de fixation (F) et le corps de base (1) et le mécanisme de butée (M) est prévu entre l'élément de verrouillage (V2) et le corps de base (1) sûr des côtés différents du corps de base (1).

11. Dispositif selon au moins l'une quelconque des revendications précédentes, **caractérisé en ce que** le dispositif (8) est réalisé en tant que pièce en matière synthétique moulée par injection d'une pièce.

12. Dispositif selon au moins l'une quelconque des revendications précédentes, **caractérisé en ce qu'**une première partie de garniture (H) réalisée en tant qu'habillage de plafond de toit ou plaque de garniture peut être fixée avec le dispositif (8) sur une tôle de carrosserie formant la structure porteuse de véhicule (K) et le dispositif (8) peut être fixé à celle-ci avant le montage final de la partie de garniture (H).

13. Dispositif selon au moins l'une quelconque des revendications précédentes, **caractérisé en ce que** un bloc-palier (L) pour une poignée-barre pour passager (G) est prévu sur le côté visible du corps de base (1).

14. Dispositif selon la revendication 13, **caractérisé en ce qu'**une première partie de garniture (H) réalisée en tant qu'habillage de plafond de toit ou plaqué de garniture ainsi qu'au moins une autre partie de garniture (G) réalisée en tant que poignée-barre pour passager peuvent être fixées avec le dispositif (8) sur une tôle de carrosserie formant la structure porteuse de véhicule (K) et **en ce que** le dispositif (8) peut être fixé avant le montage final de la première partie de garniture (H) sur celle-ci avec ou sans l'autre partie de garniture (G).
